Europäisches Patentamt

**European Patent Office**

**Office européen des brevets**

(11) Publication number: **0 313 112**
**A2**

# EUROPEAN PATENT APPLICATION

(21) Application number: **88200861.8**

(22) Date of filing: **03.05.88**

(51) Int. Cl.4: **A01J 25/00 , A01J 25/16**

(30) Priority: **23.10.87 IT 6788487**

(43) Date of publication of application:
**26.04.89 Bulletin 89/17**

(84) Designated Contracting States:
**DE ES IT**

(71) Applicant: **CMT Costruzioni Meccaniche e Tecnogia S.p.A.**
**via Provinciale 141/A**
**I-12010 Peveragno (CN)(IT)**

(72) Inventor: **Tomatis, Stefano**
**via Provinciale 141**
**I-12010 Peveragno (CN)(IT)**

(74) Representative: **Spandonari, Carlo**
**corso Re Umberto 56**
**I-10128 Torino(IT)**

(54) **Hardening vat for mozzarella and similar fresh pasta-filata cheese.**

(57) The hardening vat (10) is filled with cold water and has cheese loading means (14, 16, 18) at one end and withdrawal means (22, 24, 26) at the opposite end. A horizontal pipe (32) extends longitudinally above the vat, and carries depending, downward tubes (40, 42, 43) which are provided with valves (44, 45, 46) and terminate in oblique nozzles at their ends. Driving means (50, 52, 54) are adapted to swing the horizontal pipe, together with the depending nozzles, across the width of the vat. The valves are controlled to generate intermittent water jets from the nozzles in a desired sequence. Each of the tubes has peripheral holes (68) above the water level, and a cone (70) is welded to the inside wall of each tube above the holes to form an ejector mixing air into the water jet to oxigenate the water in the vat.

Fig.1

## Hardening vat for mozzarella and similar fresh pasta-filata cheese

This invention is related to a chilling or hardening vat for mozzarella and similar fresh pasta-filata cheese.

As is known, fresh pasta-filata cheese such as mozzarella, which is obtained by shaping curd that has been made plastic by the action of hot water, has to be hardened by chilling, so that it changes from a plastic condition to a relatively elastic condition, and to such purpose the cheese is plunged in cold water after shaping, for typical periods of 15 to 30 minutes.

Straightforward plunging of the pieces of cheese in still, cold water, however, is unsatisfactory, since the usually round or pear-shaped pieces are flattened when they line on the bottom of a water-filled vat for any length of time, and the flattened shape is maintained in the hardened product. Because of this, chilling or hardening vats are used where the cheese is frequently moved, so that the above flattening cannot take place, and so that the heat exchange between the water and the cheese is improved.

To such purpose, in some prior hardening vats the pieces of cheese lie on overlapping conveyor belts which set the mozzarella pieces rolling while they convey them, so that the pieces will frequently change their position. However, such submerged belts, as well as their driving means, are difficult to clean, and are a dangerous potential source of bacterial contamination of the cheese.

In order to overcome such drawback, it has been proposed to circulate a strong water stream thru the vat, and to rely only on the water turbulence to convey and set the mozzarella pieces bouncing along the vat, without a need for conveyor belts. Thus the inside of the vat would be free from any hardware except the wall surfaces themselves, and the vat would be easy to clean when empty.

However, it has turned out that while the bulk of the cheese pieces roll along with the water stream with the desired average stay in the vat, a part of the cheese tends to accumulate into heaps that are not disrupted by the water flow, or to make headway faster than desired. Therefore, auxiliary mechanical handlers, such as shovels or the like, have had to be used in such water-stream vats in order to make the cheese flow more uniform. The shovels, however, again pose, though on a smaller scale, the cleaning problem that such vats were meant to solve, and, moreover, the mechanical handlers touching the cheese often scratch it or squeeze it out of shape, and thus make it defective in appearance and even taste.

The problem of bacterial contamination of the chilling water, on the other hand, is not entirely due to imperfect cleaning of the vat between work sessions. If even very small amounts of anaerobic bacterial flora somehow succeed in taking hold in the vat, they will thrive and multiply because of the favorable environment (low temperature and relatively still condition of the water, i.e. low oxygen content), and, because of the substantially unchecked exponential growth, may reach unacceptable levels even in the course of a single work session. This source of contamination cannot be checked by mere cleaning between work sessions, but requires that filtering and sterilization of the water is effected somewhere in the refrigerating or other processing circuits outside the hardening vat, by chemical or other means. This adds to the complexity and operating costs of the overall installation, and involves undesirable, environment-hostile diffusion of chemicals.

It is, therefore, a main object of the invention to provide a chilling or hardening vat which overcomes or palliates the above drawbacks, and more particularly which avoids handling or touching the cheese with mechanical handlers, which ensures uniformity of the dwelling times of all processed cheese pieces in the vat, and which is easy to clean.

A further object is to provide a hardening vat in which the development of bacterial flora is curbed without a need for external processing facilities and without use of chemicals.

The above and other objects, such as will appear from the following disclosure, are attained by a chilling or hardening vat for mozzarella and similar fresh pasta-filata cheese, comprising an elongated vat for water-filling up to a predetermined level, with cheese loading means at one end of the vat, withdrawal means at the opposite end, and cheese propelling means between both ends, characterized in that said cheese propelling means comprise:

a) a swingable support longitudinally extending above the vat and carrying nozzles projecting obliquely into the vat down to a height beneath said predetermined level;

b) driving means for swinging said support together with said nozzles transversely to the width of the vat; and

c) hydraulic means connected to said nozzles for feeding water spurts to each nozzle according to a predetermined sequence.

A preferred embodiment of the invention will now be described, by way of non limiting example, with reference to the attached drawings, wherein:

Fig. 1 is a view in lateral elevation of a hardening vat according to a preferred embodiment of the invention;

Fig. 2 is a plan view of the hardening vat of Fig. 1;

Fig. 3 is an end view of the hardening vat of Figg. 1 and 2, on an enlarged scale;

Fig. 4 is an end view of a control cabinet which is part of the hardening vat of Figg. 1 to 3; and

Fig. 5 is a sectional view of an injector tube which is part of the hardening vat of Figg. 1 to 4.

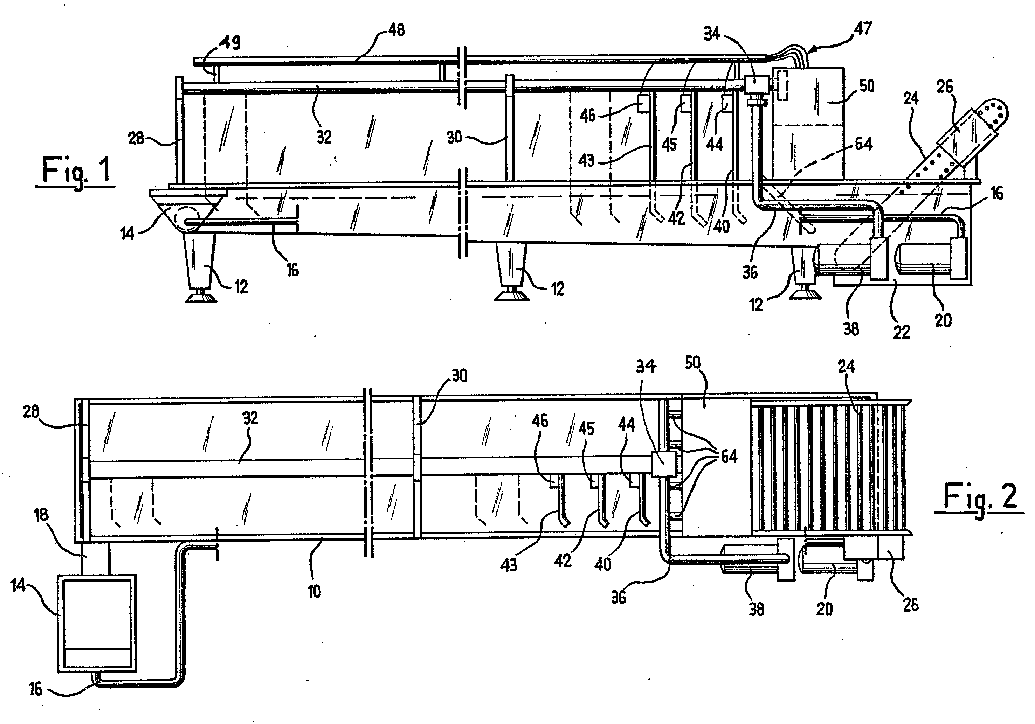

With reference to the Figures of the drawings, a hardening vat according to the preferred embodiment of the invention comprises an elongated, channel-shaped vat 10 having a flat, slightly inclined bottom, and resting on legs 12. The vat is intended for filling with cold water up to a predetermined level shown as 13 (Fig. 1). A hopper 14 for loading round pieces of mozzarella or the like is mounted laterally at a loading end of vat 10, and is provided with a pipe 16 (broken away in the Figures for clarity) opening in one of its walls, while communicating with vat 10 thru a large-diameter conduit 18. Pipe 16 is fed with water by a pump 20 which circulates water collected from vat 10 for generating a water stream thru hopper 14, the stream entering vat 10 thru conduit 20. At the opposite, delivery end, vat 10 has a pit 22 in which a sloping, metal extractor belt 24 is installed, for extraction of the hardened mozzarella pieces, as known per se, and driven by motor means 26.

A number of portal-shaped stands such as 28, 30 are supported on the side walls of vat 10, and they together rotatably support, in a central, longitudinal position above the vat, a main longitudinal pipe 32, closed at one end connected at the other end, thru a turning-sleeve joint 34, to a supply pipe 36 for supplying cold water from a pump 38, the latter also collecting water from vat 10.

At intervals along the entire length of longitudinal pipe 32, several tubes such as 40, 42, 43 (most of which are symbolized by dashed lines for simplicity) depend downwardly into the vat to a height beneath said predetermined level 13, and terminate as nozzles which are bent toward the delivery end of vat 10. Longitudinal pipe 32 is hydraulically connected with each tube 40, 42, 43, thru respective solenoid valves 44, 45, 46, individually controlled thru cables 47 running in a longitudinal channel 48 parallel to longitudinal pipe 32 and carried by the latter by means of brackets such as 49.

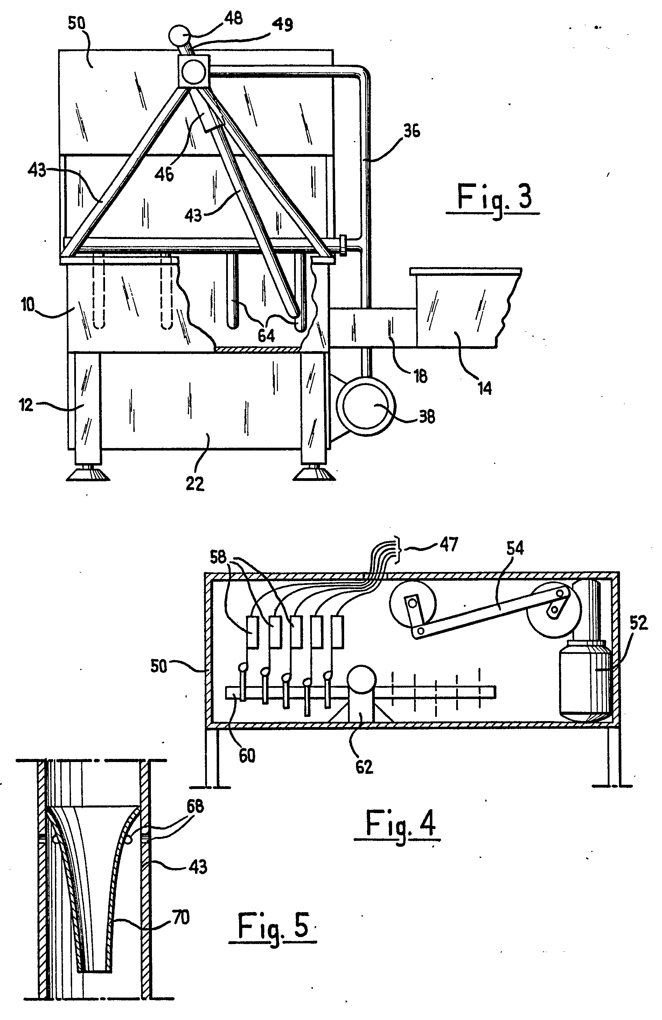

A cabinet 50, transversely surmounting vat 10, houses a driving unit 52 (see Fig. 4) comprising a motor with reduction gear, which drives the end of longitudinal pipe 32 thru a linkage 54, so that pipe 32 rocks around its horizontal axis, and so that tubes 40, 42, 43, and consequently their terminal nozzles, swing transversely to the vat, substantially across its entire width.

Cabinet 50 further houses a control unit 56 for solenoid valves 44, comprising a bank of normally open switches 58, which are respectively connected to drive one of the valve control cables 47, and a camshaft 60 (partly dashed in Fig. 4), driven by a motor 62 with reduction gear, and arranged to turn on and off the individual switches according to a desired program. According to the preferred embodiment of the invention, the cams are arranged so as to generate a sequence of cold water spurts from successive nozzles 40, 42, 43, etc., starting from the one closest to the delivery end of the vat and proceeding backward. The timing of each water spurt is such that it begins at each nozzle when the latter is at one end of its swing, and that it stops at the opposite end.

Preferably, according to the invention, a bank of auxiliary, stationary nozzles 64 is arranged near the delivery end of the vat, and downstream of all swinging nozzles. The stationary nozzles 64 are arranged across the vat with a forward inclination, and are supplied by the same pump 38, thru a branch from pipe 36, to generate constant jets across the entire width of the vat.

In the operation of the above described hardening vat, the cheese, typically mozzarella cheese in small, round pieces, is gradually loaded in bulk into hopper 14, for example by means of a conveyor belt not shown, and is propelled by the water stream generated in the hopper by the pipe 16 and conduit 20. The stream pushes the cheese into vat 10. .

The cheese pieces will sink to the vat bottom and will be slowly transported by the stream in the vat to the delivery end of the vat, through the transport will be partial and irregular. Periodically, nozzles 40, 42, 43, ... will project a high-speed, bubbly water spurt in the general forward direction from the loading end to the delivery end of the vat. Each of said water spurts will cause a forward, rolling leap of the cheese pieces in the underlying area, with a bouyancy effect due to the mixed air.

Eventually, the vat bottom will be more or less uniformly covered with cheese from one end to the other. In such conditions, when the last nozzle emits its spurt, while sweeping the vat bottom transversely, the cheese in that area is pushed forwardly, until it is captured by the spurts from the stationary nozzles, and is pushed unto extraction belt 24, to be withdrawn from the vat and delivered to subsequent processing.

An area thus becomes free near the last swinging nozzle. Meanwhile a spurt is emitted by the next swinging nozzle, so that the underlying cheese is displaced to the free area beneath the last nozzle. Thus the cheese is fed forward in steps by successive leaps.

The overall effect is to push along the cheese by separate leaps with intervening periods of rest, and with a good control of the average dwelling time of each piece, and without any contact with mechanical members, except for the vat walls.

Stationary nozzles 64 ensure that the cheese, when near extractor belt 24, is immediately pushed onto it, so that the terminal area is always free.

Since the only parts of the hardening vat in contact with water or cheese are the walls of the vat and the submerged nozzles, which are both easily accessible and free from cavities, cleaning of the vat is easy and reliable.

Preferably, each of the tubes 40, 42, 43, ... has a row of several holes such as 68 (Fig. 5) thru the tube wall above the water level 13, and a cone or inverted funnel 70 is welded to the tube wall above the height of holes 68 to form an ejector. Air is thus sucked in by the jets and is mixed to the water. One desirable effect of such mixing is to increase the turbulence of the water in the vat and to generate air bubbles which add buoyancy to the mozzarella pieces. However, an even more desirable effect is achieved in that the water in the vat is strongly oxygenated by the intaken air, and the bacterial population is thus checked or eliminated. The same cones and holes are preferably provided in the stationary nozzles 64.

In actual operation, several auxiliary members will cooperate with the above described hardening vat, which are not disclosed because they are obvious for a person skilled in the art, such as an external water refrigerator, an electric control panel. These have not been described because they do not belong to the invention. Moreover, some of the facilities described could be differently designed, such as the loading hopper, the extractor belt, the driving mechanism of the longitudinal pipe, the control mechanism. In particular, for greater flexibility the bank of cam-operated switches could be replaced with a programmable electronic controller, in a way obvious for the person skilled in the art. Finally, some of the units described could be dispensed with in special cases, such as the bank of auxiliary nozzles, or the ejector devices incorporated in the depending tubes.

## Claims

1. A chilling or hardening vat for mozzarella and similar fresh pasta-filata cheese, comprising an elongated vat (10) for water-filling up to a predetermined level (13), with cheese loading means (14-18) at one end of the vat, withdrawal means (24, 26) at the opposite end, and cheese propelling means between both ends, characterized in that said cheese propelling means comprise

   a) a swingable support (32) longitudinally extending above the vat (10) and carrying nozzles (40, 42, 43) projecting obliquely into the vat down to a height beneath said predetermined level (13);

   b) driving means (52, 54) for swinging said support together with said nozzles transversely to the width of the vat; and

   c) hydraulic means (32, 34, 38, 44-48, 50, 58-62) connected to said nozzles for feeding a water jet to each nozzle according to a predetermined sequence.

2. The chilling of hardening vat of claim 1, characterized in that it comprises a plurality of stationary nozzles (64) arranged across the vat near the withdrawal means.

3. The chilling or hardening vat of one of claims 1 or 2, characterized in that said swingable support is a water-supplied, horizontal, longitudinal pipe (32), carrying depending, downward tubes which are provided with said nozzles at their ends, and said hydraulic means include respective valves (44, 45, 46) housed in said tubes for turning the water jets from said nozzles on and off.

4. The chilling or hardening vat of one of claims 1 to 3, characterized in that each of said swinging nozzles (40, 42, 43, ...) has a plurality of peripheral holes (68) above said predetermined level, and a cone (70) is bonded to the tube wall above the height of said holes to form an ejector.

5. The chilling or hardening vat of one of claims 1 to 4, characterized in that each of said stationary nozzles (64) has a plurality of peripheral holes (68) above said predetermined level, and a cone (70) is bonded to the nozzle wall above the height of said holes to form an ejector.

Fig. 1

Fig. 2

EP 0 313 112 A2

_Fig. 3_

_Fig. 4_

_Fig. 5_